# EUROPÄISCHE PATENTSCHRIFT

(11) **EP 2 062 935 B1**
(45) Veröffentlichungstag und Bekanntmachung des Hinweises auf die Patenterteilung: **18.04.2012**
(21) Anmeldenummer: 08169555.3
(22) Anmeldetag: 20.11.2008
(51) Int. Cl.: C08J 9/14, C08K 5/00

(54) **Verfahren zur Einbringung von Feststoffpartikeln in Polymerschmelzen**
Method for inserting solid particles in polymer melts
Procédé destiné à l'introduction de particules solides dans des masses fondues polymères

(30) Priorität: 21.11.2007 EP 07121210
(43) Veröffentlichungstag der Anmeldung: 27.05.2009
(73) Patentinhaber: BASF SE, 67056 Ludwigshafen (DE)
(72) Erfinder: Hahn, Klaus, 67281 Kirchheim (DE); Allmendinger, Markus, 67480 Edenkoben (DE); Nehls, Benjamin, 67063 Ludwigshafen (DE); Bellin, Ingo, 68159 Mannheim (DE); Schmied, Bernhard, 67227 Frankenthal (DE); Ruch, Joachim, 67157 Wachenheim (DE); Fischer, Horst, 67454 Haßloch (DE); Rylander, Jessica, 691 3 Karlskoga (Schweden) (SE)

(56) Entgegenhaltungen:
- WO-A1-2006/007996

## Beschreibung

Die Erfindung betrifft ein Verfahren zur kontinuierlichen Einbringung von Feststoffpartikeln in druckbeaufschlagte Polymerschmelzen und Verwendung in einem Verfahren zur Herstellung von flammgeschützten Styrolpolymerpartikel- oder Styrolpolymer-Extrusionsschaumstoffen durch Schmelzeimprägnierung.

Verfahren zur Herstellung von flammgeschützten, expandierbaren Styrolpolymeren durch Extrusion einer treibmittelhaltigen Styrolpolymerschmelze sind z. B aus EP-A 0 981 574, WO 97/45477 oder WO 03/46016 bekannt. Hierbei wird das Flammschutzmittel gegebenenfalls zusammen mit weiteren Additiven mit Polystyrol aufgeschmolzen und anschließend ein Treibmittel zugegeben.

Als Flammschutzsynergisten für halogenierte Flammschutzmittel, wie Hexabromcyclododekan (HBCD) werden hierbei in der Regel thermische Radikalbildner, z.B. Dicumylperoxid oder Dicumyl, verwendet.

Feststoffpartikel können in der Regel nicht direkt in druckbeaufschlagte Räume gefördert werden. In der Regel kommen daher teure Extruder zum Einsatz. Hierbei werden die als Füllstoffe vorliegenden Additive in einer Polymerschmelze kompoundiert. Der Extruder oder eine nachgeschaltete Schmelzepumpe baut den notwendigen Druck auf, um die füllstoffhaltige Polymerschmelze in den Druckraum zu fördern.

Durch den Extrusionsprozess erhöht sich die Temperaturbelastung für die thermosensiblen Additive, wie Flammschutzmittel und Peroxide aufgrund der Verweilzeit und durch lokale, scherinduzierte Temperaturspitzen. Die Additive können hierbei abgebaut und die effektiv wirksame Menge im Produkt verringert werden. Bei Verwendung von Flammschutzmitteln wie HBCD kann hoch korrosive Bromwasserstoffsäure entstehen

Ein Verfahren zur Herstellung von flammgeschützten, expandierbaren Polystyrol wird in WO 2006/007995 beschrieben, bei dem die Verweilzeit des Flammschutzmittels bei einer Schmelzetemperatur im Bereich von 140 bis 220° weniger als 30 Minuten beträgt.

Nach dem Verfahren der WO 2006/07996 werden zur einfachen und schonenden Dosierung die Flammschutzsynergisten als Flüssigkeiten oder in Lösung mit einer Pumpe einer treibmittelhaltigen Styrolpolymerschmelze im Hauptstrom zudosiert. Des weiteren wird vorgeschlagen, das Flammschutzmittel mit einem Anteil Styrolpolymerschmelze vorzumischen und über einen Seitenextruder zu dosieren. Dadurch wird zwar die Zeit der Temperaturbelastung der Flammschutzmittel deutlich verkürzt, allerdings kann bereits bei der Vormischung des Flammschutzmittels in der Styrolpolymerschmelze eine thermische Schädigung des Flammschutzmittels auftreten. Außerdem verursacht diese Verfahrenschritt zusätzliche Kosten.

Aufgabe der vorliegenden Erfindung war es daher, den genannten Nachteilen abzuhelfen und ein Verfahren zur einfachen und schonenden Einbringung von Feststoffpartikeln in Polymerschmelzen bereitzustellen. Das Verfahren sollte insbesondere kontinuierlich ausführbar und bei der Herstellung von flammgeschützten, expandierbaren Styrolpolymeren (EPS) und flammgeschützten Styrolpolymerextrusionschaumstoffen (XPS) einsetzbar sein.

Demgemäß wurde ein Verfahren zur kontinuierlichen Einbringung von Feststoffpartikeln in druckbeaufschlagte Polymerschmelzen gefunden, wobei die Feststoffpartikel in Form einer Suspension mittels einer Drehschieberpumpe in die druckbeaufschlagte Polymerschmelze eingebracht werden.

Für die Polymerschmelze kommen in der Regel Schmelzen von thermoplastischen Polymeren in Betracht. Bevorzugt werden nicht-kristalline Polymere mit einer Glasübergangstemperatur im Bereich von 70 bis 120°C, besonders bevorzugt Styrolpolymere.

Mittels einer Drehschieberpumpe (Orlita) können überraschenderweise hochkonzentrierte Suspensionen kontinuierlich in einen Druckraum, beispielsweise einen statischen Mischer, gefordert werden. Bevorzugt liegt der Feststoffgehalt der Suspension im Bereich von 60 bis 95 Gew.-%, besonders bevorzugt im Bereich von 70 bis 80 Gew.-%. Die suspendierten Feststoffe weisen vorzugsweise einen durch Lichtstreuung ermittelten D50-Wert für die Partikelgröße im Bereich von 1 bis 100 µm auf.

Zur Herabsetzung der Viskosität können der Suspension weitere Zusatzkomponenten, beispielsweise Polyethylenwachse, Treibmittel oder Treibmittelbestandteile, Styrol oder Ethylbenzol zugegeben werden.

Die Suspension weist bei einer Temperatur im Bereich von 20 bis 180°, bevorzugt im Bereich von 30 bis 140°C eine Viskosität von 10 bis 1000 mPas auf. Die Suspension wird vorzugsweise bei Raumtemperatur, kann aber auch in Abhängigkeit der Viskosität bei höheren Temperaturen in die Polymerschmelze eingebracht werden. Beim Erwärmen der Suspension auf Temperaturen im Bereich von 140 bis 180°C kann die Suspension in eine Lösung übergehen. Dies erfolgt beispielsweise bei Hexabromcyclododecan (HBCD) in oligomeren Styrolpolymeren als Suspensionsmedium.

Als Suspensionsmedium werden bevorzugt aliphatische Kohlenwasserstoffe oder aliphatische Kohlenwasserstoffmischungen, beispielsweise Mineralöle, medizinisches Weißöl, Pentane oder Octane eingesetzt. Geeignete Suspensionsmedien sind auch oligomere Polymere mit Molekulargewichten im Bereich von 500 bis 5000 g/mol, insbesondere oligomere Styrolpolymerisate. Die oligomeren Polymeren haben in der Regel einen geringeren weichmachenden Effekt auf die Polymermatrix.

Das erfindungsgemäße Verfahren eignet sich insbesondere zur schonenden Dosierung von temperaturempfindlichen Feststoffpartikeln. Bevorzugt wird hierbei Hexabromcyclododecan (HBCD) mit einem D50-Wert von weniger als 80 µm eingesetzt wird.

Gegebenenfalls können über die Suspension auch weitere Additive, beispielsweise Nukleierungsmittel, Säurefänger für Zersetzungsprodukte der Flammschutzmittel, wie Aluminium- oder Magnesiumhydroxide, Ruß oder Graphit, Flammschutzsynergisten, beispielsweise Peroxide oder Weichmacher eingebracht werden.

Die Suspension kann beispielsweise kontinuierlich mittels eines Intensivmischers hergestellt werden. Die Feststoffpartikel werden in dem Suspensionsmittel fein dispergiert. Um niedrige Viskositäten und eine homogene Verteilung der Feststoffpartikel in der Suspension zu gewährleisten, kann die Zuleitung zusätzliche Mischeinheiten enthalten und beheizt werden.

Besonders bevorzugt wird das Verfahren zur Dosierung von Flammschutzmitteln bei der Herstellung von flammgeschützten expandierbaren oder expandierten Styrolpolymerpartikel oder Styrolpolymer-Extrusionsschaumstoffen durch Schmelzeimprägnierung eingesetzt. Die treibmittelhaltige Styrolpolymerschmelze kann dabei nach Zugabe des Flammschutzmittels in form einer Supension und gegebenenfalls weiterer Zusatzstoffe durch eine Düsenplatte extrudiert und zu Schaumstoffpartikeln geschnitten, bzw. durch eine Düse zu Styrolpolymer-Extrusionsschaumstoffen (XPS) extrudiert werden. Zur Herstellung von expandierbaren Styrolpolymerpartikeln (EPS) wird direkt an die Düse eine Druckunterwassergranulierungen angeschlossen.

Besonders bevorzugt wird das erfindungsgemäße Verfahren bei der Herstellung von expandierbaren Styrolpolymerpartikeln (EPS), wie im Folgenden beschrieben, eingesetzt.

Es hat sich gezeigt, dass Styrolpolymere mit Molekulargewichten Mw von unter 170.000 bei der Granulierung zu Polymerabrieb führen. Bevorzugt weist das expandierbare Styrolpolymer ein Molekulargewicht im Bereich von 190.000 bis 400.000 g/mol, besonders bevorzugt im Bereich von 220.000 bis 300.000 g/mol auf. Aufgrund des Molekulargewichtsabbau durch Scherung und/oder Temperatureinwirkung liegt das Molekulargewicht des expandierbaren Styrolpolymers in der Regel etwa 10.000 g/mol unter dem Molekulargewicht des eingesetzten Styrolpolymers.

Um möglichst kleine Granulatpartikel zu erhalten, sollte die Strangaufweitung nach dem Düsenaustritt möglichst gering sein. Es hat sich gezeigt, dass die Strangaufweitung unter anderem durch die Molekulargewichtsverteilung des Styrolpolymeren beeinflusst werden kann. Das expandierbare Styrolpolymer sollte daher bevorzugt eine Molekulargewichtsverteilung mit einer Uneinheitlichkeit M_{w}/Mₙ von höchstens 3.5, besonders bevorzugt im Bereich von 1,5 bis 3 und ganz besonders bevorzugt im Bereich von 1,8 bis 2,6 aufweisen.

Bevorzugt werden als Styrolpolymere glasklares Polystyrol (GPPS), Schlagzähpolystyrol (HIPS), anionisch polymerisiertes Polystyrol oder Schlagzähpolystyrol (A-IPS), Sty-Styrol-α-Methstyrol-copolymere, Acrylnitril-Butadien-Styrolpolymerisate (ABS), Styrol-Acrylnitril (SAN) Acrylnitril-Styrol-Acrylester (ASA), Methacrylat-Butadien-Styrol (MBS), Methylmethacrylat-Acrylnitril-Butadien-Styrol (MABS)-polymerisate oder Mischungen davon oder mit Polyphenylenether (PPE) eingesetzt.

Die genannten Styrolpolymeren können zur Verbesserung der mechanischen Eigenschaften oder der Temperaturbeständigkeit gegebenenfalls unter Verwendung von Verträglichkeitsvermittlern mit thermoplastischen Polymeren, wie Polyamiden (PA), Polyolefinen, wie Polypropylen (PP) oder Polyethylen (PE), Polyacrylaten, wie Polymethylmethacrylat (PMMA), Polycarbonat (PC), Polyestern, wie Polyethylenterephthalat (PET) oder Polybutylenterephthalat (PBT), Polyethersulfonen (PES), Polyetherketonen oder Polyethersulfiden (PES) oder Mischungen davon in der Regel in Anteilen von insgesamt bis maximal 30 Gew.-%, bevorzugt im Bereich von 1 bis 10 Gew.-%, bezogen auf die Polymerschmelze, abgemischt werden. Des weiteren sind Mischungen in den genannten Mengenbereichen auch mit z. B hydrophob modifizierten oder funktionalisierten Polymeren oder Oligomeren, Kautschuken, wie Polyacrylaten oder Polydienen, z. B. Styrol-Butadien-Blockcopolymeren oder biologisch abbaubaren aliphatischen oder aliphatisch/aromatischen Copolyestern möglich.

Als Verträglichkeitsvermittler eignen sich z.B. Maleinsäureanhydrid-modifizierte Styrolcopolymere, Epoxidgruppenhaltige Polymere oder Organosilane.

Der Styrolpolymerschmelze können auch Polymerrecyklate der genannten thermoplastischen Polymeren, insbesondere Styrolpolymere und expandierbare Styrolpolymere (EPS) in Mengen zugemischt werden, die deren Eigenschaften nicht wesentlich verschlechtern, in der Regel in Mengen von maximal 50 Gew.-%, insbesondere in Mengen von 1 bis 20 Gew.-%.

Die treibmittelhaltige Styrolpolymerschmelze enthält in der Regel eine oder mehrere Treibmittel in homogener Verteilung in einem Anteil von insgesamt 2 bis 10 Gew.-% bevorzugt 3 bis 7 Gew.-%, bezogen auf die treibmittelhaltige Styrolpolymerschmelze. Als Treibmittel, eigenen sich die üblicherweise in EPS eingesetzten physikalische Treibmittel, wie aliphatischen Kohlenwasserstoffe mit 2 bis 7 Kohlenstoffatomen, Alkohole, Ketone, Ether oder halogenierte Kohlenwasserstoffe. Bevorzugt wird iso-Butan, n-Butan, iso-Pentan, n-Pentan eingesetzt.

Zur Verbesserung der Verschäumbarkeit können feinverteilte Innenwassertröpfchen in die Styrolpolymermatrix eingebracht werden. Dies kann beispielsweise durch die Zugabe von Wasser in die aufgeschmolzene Styrolpolymermatrix erfolgen. Die Zugabe des Wassers kann örtlich vor, mit oder nach der Treibmitteldosierung erfolgen. Eine homogene Verteilung des Wassers kann mittels dynamischen oder statischen Mischern erreicht werden.

In der Regel sind 0 bis 2, bevorzugt 0,05 bis 1,5 Gew.-% Wasser, bezogen auf das Styrolpolymer, ausreichend.

Expandierbare Styrolpolymere (EPS) mit mindestens 90% des Innenwassers in Form von Innenwassertröpfchen mit einem Durchmesser im Bereich von 0,5 bis 15 µm bilden beim Verschäumen Schaumstoffe mit ausreichender Zellzahl und homogener Schaumstruktur.

Die zugesetzte Treibmittel- und Wassermenge wird so gewählt, dass die expandierbaren Styrolpolymeren (EPS) ein Expansionsvermögen α, definiert als Schüttdichte vor dem Verschäumen/Schüttdichte nach dem Verschäumen höchstens 125 bevorzugt 25 bis 100 aufweisen.

Die expandierbaren Styrolpolymergranulate (EPS) weisen in der Regel eine Schüttdichte von höchstens 700 g/l bevorzugt im Bereich von 590 bis 660 g/l auf. Bei Verwendung von Füllstoffen können in Abhängigkeit von der Art und Menge des Füllstoffes Schüttdichten im Bereich von 590 bis 1200 g/l auftreten.

Als Flammschutzmittel können organische Bromverbindung mit einem Bromgehalt von mindestens 50 Gew.-% eingesetzt werden. Insbesondere geeignet sind aliphatische, cycloaliphatische und aromatische Bromverbindungen, wie Hexabromcyclododekan, Pentabrommonochlorcyclohexan, Pentabromphenylallylether. Das Flammschutzmittel wird in der Regel in Mengen von 0,2 bis 5, bevorzugt von 0,5 bis 2,5 Gew.-%, bezogen auf das Styrolpolymer, eingesetzt.

Geeignete Flammschutzsynergisten sind thermische Radikalbildner mit Halbwertszeiten von 6 Minuten bei Temperaturen im Bereich von 110 bis 300°C, bevorzugt 140 bis 230°C, die flüssig oder in Wasser, Kohlenwasserstoffen oder Weisöl löslich sind. Bevorzugt wird als Flammschutzsynergist Di-tert.-butyl-peroxid (Trigonox® B), Tert.-butylhydroperoxid (Trigonox® A80), eine Lösung von Dicumylperoxid in Pentan oder eine wässrige Lösung eines Peroxides oder Hydroperoxides eingesetzt. Der Flammschutzsynergist wird bevorzugt rein oder im Falle von Feststoffen in bei Normalbedingungen (1 bar, 23°C) nahezu gesättigter Lösung eingesetzt, so dass er mit klassischen Pumpsystemen direkt in einen temperierten und druckbeaufschlagten Raum dosiert werden kann. Durch das Vorliegen in flüssiger Phase ist eine Dosierung so möglich, dass auch von niedrig zerfallenden Peroxiden ausreichende Mengen die Prozess- bzw. Extrusionsbedingungen überstehen und trotzdem eine homogene Einmischung erreicht wird. In der Regel wird der Flammschutzsynergist in Mengen im Bereich von 0,05 bis 1 Gew.-%, bevorzugt im Bereich von 0,1 bis 0,5 Gew.-% eingesetzt.

Bevorzugt wird das erfindungsgemäße Verfahren zur Herstellung von flammgeschützten, expandierbaren Styrolpolymeren (EPS) eingesetzt, wobei das Flammschutzmittel in Form einer Suspension dispergiert und einer Treibmittel-haltigen Styrolpolymerschmelze im Hauptstrom zudosiert und gemeinsam durch eine Düsenplatte mit anschließender Unterwassergranulation extrudiert wird. Der Flammschutzsynergist wird bevorzugt über eine Pumpe und Dosierlanze auf gleicher Höhe oder stromabwärts in den Hauptstrom direkt dosiert.

Hierbei kann die Verweilzeit des Flammschutzmittels und des Flammschutzsynergisten bei einer Schmelzetemperatur im Bereich von 140 bis 220°C, bevorzugt im Bereich von 170 bis 200°C bei weniger als 10 Minuten gehalten werden

Des weiteren können der Styrolpolymerschmelze Additive, Keimbildner, Füllstoffe, Weichmacher, lösliche und unlösliche anorganische und/oder organische Farbstoffe und Pigmente, z.B. IR-Absorber, wie Ruß, Graphit oder Aluminiumpulver gemeinsam oder räumlich getrennt, z.B. über Mischer oder Seitenextruder zugegeben werden. In der Regel werden die Farbstoffe und Pigmente in Mengen im Bereich von 0,01 bis 30, bevorzugt im Bereich von 1 bis 5 Gew.-% zugesetzt. Zur homogenen und mikrodispersen Verteilung der Pigmente in dem Styrolpolymer kann es insbesondere bei polaren Pigmenten zweckmäßig sein ein Dispergierhilfsmittel, z.B Organosilane, epoxygruppenhaltige Polymere oder Maleinsäureanhydrid-gepfropfte Styrolpolymere, einzusetzen. Bevorzugte Weichmacher sind Mineralöle, Phthalate, die in Mengen von 0,05 bis 10 Gew.-%, bezogen auf das Styrolpolymerisat, eingesetzt werden können.

Zur Herstellung der expandierbaren Styrolpolymerisate wird das Treibmittel in die Polymerschmelze eingemischt. Das Verfahren umfasst die Stufen a) Schmelzerzeugung, b) Mischen c) Kühlen d) Fördern und e) Granulieren. Jede dieser Stufen kann durch die in der Kunststoffverarbeitung bekannten Apparate oder Apparatekombinationen ausgeführt werden. Zur Einmischung eignen sich statische oder dynamische Mischer, beispielsweise Extruder. Die Polymerschmelze kann direkt aus einem Polymerisationsreaktor entnommen werden oder direkt in dem Mischextruder oder einem separaten Aufschmelzextruder durch Aufschmelzen von Polymergranulaten erzeugt werden. Die Kühlung der Schmelze kann in den Mischaggregaten oder in separaten Kühlern erfolgen. Für die Granulierung kommen beispielsweise die druckbeaufschlagte Unterwassergranulierung, Granulierung mit rotierenden Messern und Kühlung durch Sprühvernebelung von Temperierflüssigkeiten oder Zerstäubungsgranulation in Betracht. Zur Durchführung des Verfahrens geeignete Apparateanordnungen sind z.B.:
a) Polymerisationsreaktor - statischer Mischer/Kühler - Granulator
b) Polymerisationsreaktor - Extruder - Granulator
c) Extruder - statischer Mischer - Granulator
d) Extruder - Granulator

Weiterhin kann die Anordnung Seitenextruder zur Einbringung von Additiven, z.B. von Feststoffen oder thermisch empfindlichen Zusatzstoffen aufweisen.

Die treibmittelhaltige Styrolpolymerschmelze wird in der Regel mit einer Temperatur im Bereich von 140 bis 300°C, bevorzugt im Bereich von 160 bis 240°C durch die Düsenplatte gefördert. Eine Abkühlung bis in den Bereich der Glasübergangstemperatur ist nicht notwendig.

Die Düsenplatte wird mindestens auf die Temperatur der treibmittelhaltigen Styrolpolymerschmelze beheizt. Bevorzugt liegt die Temperatur der Düsenplatte im Bereich von 20 bis 100°C über der Temperatur der treibmittelhaltigen Styrolpolymerschmelze. Dadurch werden Polymerablagerungen in den Düsen verhindert und eine störungsfreie Granulierung gewährleistet.

Um marktfähige Granulatgrößen zu erhalten sollte der Durchmesser (D) der Düsenbohrungen am Düsenaustritt im Bereich von 0,2 bis 1,5 mm, bevorzugt im Bereich von 0,3 bis 1,2 mm, besonders bevorzugt im Bereich von 0,3 bis 0,8 mm liegen. Damit lassen sich auch nach Strangaufweitung Granulatgrößen unter 2 mm, insbesondere im Bereich 0,4 bis 1,4 mm gezielt einstellen.

Die Strangaufweitung kann außer über die Molekulargewichtsverteilung durch die Düsengeometrie beeinflusst werden. Die Düsenplatte weist bevorzugt Bohrungen mit einem Verhältnis L/D von mindestens 2 auf, wobei die Länge (L) den Düsenbereich, dessen Durchmesser höchstens dem Durchmesser (D) am Düsenaustritt entspricht, bezeichnet. Bevorzugt liegt das Verhältnis L/D im Bereich von 3 - 20.

Im allgemeinen sollte der Durchmesser (E) der Bohrungen am Düseneintritt der Düsenplatte mindestens doppelt so groß wie der Durchmesser (D) am Düsenaustritt sein.

Eine Ausführungsform der Düsenplatte weist Bohrungen mit konischem Einlauf und einem Einlaufwinkel α kleiner 180°, bevorzugt im Bereich von 30 bis 120° auf. In einer weiteren Ausführungsform besitzt die Düsenplatte Bohrungen mit konischem Auslauf und einen Auslaufwinkel β kleiner 90°, bevorzugt im Bereich von 15 bis 45°. Um gezielte Granulatgrößenverteilungen der Styrolpolymeren zu erzeugen kann die Düsenplatte mit Bohrungen unterschiedlicher Austrittsdurchmesser (D) ausgerüstet werden. Die verschiedenen Ausführungsformen der Düsengeometrie können auch miteinander kombiniert werden.

Ein besonders bevorzugtes Verfahren zur Herstellung von expandierbaren Styrolpolymeren umfasst die Schritte
a) Polymerisation von Styrolmonomer und gegebenenfalls copolymerisierbaren Monomeren zu einem Styrolpolymer mit einem mittleren Molekulargewicht im Bereich von 160.000 bis 400.000 g/mol,
b) Entgasung der erhaltenen Styrolpolymerschmelze,
c) Einmischen des Treibmittels und gegebenenfalls Additiven, in die Styrolpolymerschmelze mittels statischen oder dynamischen Mischer bei einer Temperatur von mindestens 150°C, bevorzugt 180 - 260°C,
d) Kühlen der treibmittelhaltigen Styrolpolymerschmelze auf eine Temperatur, die mindestens 120°C, bevorzugt 150 - 200°C beträgt,
e) Eintragen des Flammschutzmittels in Form einer Suspension mittels einer Drehschieberkolbenpumpe in die druckbeaufschlagte Polymerschmelze,
f) Austrag durch eine Düsenplatte mit Bohrungen, deren Durchmesser am Düsenaustritt höchstens 1,5 mm beträgt und
g) Granulieren der treibmittelhaltigen Schmelze.

In Schritt g) kann die Granulierung direkt hinter der Düsenplatte unter Wasser bei einem Druck im Bereich von 1 bis 25 bar, bevorzugt 5 bis 15 bar erfolgen.

Aufgrund der Polymerisation in Stufe a) und Entgasung in Stufe b) steht für die Treibmittelimprägnierung in Stufe d) direkt eine Polymerschmelze zur Verfügung und ein Aufschmelzen von Styrolpolymeren ist nicht notwendig. Dies ist nicht nur wirtschaftlicher, sondern führt auch zu expandierbaren Styrolpolymeren (EPS) mit niedrigen Styrolmonomergehalten, da die mechanischen Schereinwirkung im Aufschmelzbereich eines Extruders, die in der Regel zu einer Rückspaltung von Monomeren führt, vermieden wird. Um den Styrolmonomerengehalt niedrig zu halten, insbesondere unter 500 ppm mit Styrolmonomergehalten, ist es ferner zweckmäßig, den mechanischen und thermischen Energieeintrag in allen folgenden Verfahrensstufen so gering wie möglich zu halten. Besonders bevorzugt werden daher Scherraten unter 50/sec, bevorzugt 5 bis 30/sec, und Temperaturen unter 260°C sowie kurze Verweilzeiten im Bereich von 1 bis 20, bevorzugt 2 bis 10 Minuten in den Stufen d) bis f) eingehalten. Besonders bevorzugt werden ausschließlich statische Mischer und statische Kühler im gesamten Verfahren eingesetzt. Die Polymerschmelze kann durch Druckpumpen, z.B. Zahnradpumpen gefördert und ausgetragen werden.

Eine weitere Möglichkeit zur Verringerung des Styrolmonomerengehaltes und/oder Restlösungsmittel wie Ethylbenzol besteht darin, in Stufe b) eine Hochentgasung mittels Schleppmitteln, beispielsweise Wasser, Stickstoff oder Kohlendioxid, vorzusehen oder die Polymerisationsstufe a) anionisch durchzuführen. Die anionische Polymerisation von Styrol führt nicht nur zu Styrolpolymeren mit niedrigem Styrolmonomeranteil, sondern gleichzeitig zur geringen Styrololigomerenanteilen.

Zur Verbesserung der Verarbeitbarkeit können die fertigen expandierbaren Styrolpolymergranulate durch Glycerinester, Antistatika oder Antiverklebungsmittel beschichten werden.

Das EPS Granulat kann mit Glycerinmonostearat GMS (typischerweise 0,25 %), Glycerintristearat (typischerweise 0,25%) feinteiliger Kieselsäure Aerosil R972 (typischerweise 0,12%) und Zn-Stearat (typischerweise 0,15%), sowie Antistatikum beschichtet werden.

Die expandierbaren Styrolpolymergranulate können in einem ersten Schritt mittels Heißluft oder Wasserdampf zu Schaumpartikeln mit einer Dichte im Bereich von 8 bis 100 g/l vorgeschäumt und in einem 2. Schritt in einer geschlossenen Form zu Partikelformteilen verschweißt werden.

Mit dem erfindungsgemäßen Verfahren lassen sich temperaturempfindliche Additive, insbesondere Flammschutzmittel schonend und homogen in eine Polymerschmelze einarbeiten. Dadurch kann die eingesetzte Menge der temperaturempfindlichen Additive reduziert bzw. die effektive Menge im Produkt erhöht werden. Aufgrund der schonenden Einarbeitung von Flammschutzmitteln ist für einen ausreichenden Flammschutz der Einsatz von Flammschutzsynergisten nicht unbedingt erforderlich.

### Beispiele:

### Einsatzstoffe:

PS148 G (Polystyrol der BASF AG mit einer Viskositätszahl VZ von 83 ml/g, mittlerem Molekulargewicht M_{w} von 220.000 g/mol und einer Uneinheitlichkeit M_{w}/Mₙ von 2,9)
PS158 K (Polystyrol der BASF AG mit einer Viskositätszahl VZ von 98 ml/g, mittlerem Molekulargewicht M_{w} von 280.000 g/mol und einer Uneinheitlichkeit M_{w}/Mₙ von 2,8)
HBCD: Hexabromcyclododecan FR-1206 Hat der Fa. Eurobrom (Flammschutzmittel) in Form einer 70 gew.-%igen Suspension in Weißöl.

### Flammschutzsynergisten:

Perkadox® 30
50 gew.-%ige Lösung von Dicumylperoxid in Pentan

### Beispiele 1 bis 3:

Zu einem Hauptstrom einer treibmittelhaltige Polymerschmelze (Polystyrol 158 K, 3,6 Gew.-% Graphit und 6,5 Gew.-% n-Pentan) wurde nach Abkühlen von 260°C auf 180°C mittels einer Drehschieberpumpe 2,55 Gew.-% einer Suspension aus 70 Gew.-% HBCD und 30 Gew.-% Weißöl eingemischt. Über eine Kolbenpumpe und Dosierlanze wurde stromabwärts Dicumylperoxid als Flammschutzsynergist gelöst in Pentan dem gekühlten Hauptstrom zudosiert. Die resultierende Graphit-, Treibmittel- Flammschutz- und Synergist-haltige Polymerschmelze wurde bei einem Durchsatz von 60 kg/h durch eine Düsenplatte mit 32 Bohrungen (0,75 mm Durchmesser) gefördert und mit Hilfe einer druckbeaufschlagten Unterwassergranulierung zu kompakten Granulaten mit enger Größenverteilung granuliert.

### Beispiele 4 und 5: (Vergleichsversuche)

Zu einem Hauptstrom einer treibmittelhaltige Polymerschmelze (Polystyrol 158 K und 7 Gew.-% n-Pentan) wurde nach Abkühlen von 260°C auf 190°C über eine Kolbenpumpe in Weisöl suspendiertes Hexabromcyclododekan (HBCD) gemäß den Angaben in Tabelle 1 (zugegebenen Mengen in Gewichtsprozent, bezogen auf Polystyrol) zudosiert. Über eine Kolbenpumpe und Dosierlanze wurde stromabwärts 0,4 Gew.-% Perkadox@ als Flammschutzsynergist zudosiert.. Die resultierende Polymerschmelze wurde bei einem Durchsatz von 60 kg/h durch eine Düsenplatte mit 32 Bohrungen (0,75 mm Durchmesser) gefördert und mit Hilfe einer druckbeaufschlagten Unterwassergranulierung zu kompakten Granulaten mit enger Größenverteilung granuliert.

### Vergleichsversuch V1

Zu einem Hauptstrom einer treibmittelhaltige Polymerschmelze (Polystyrol 158 K, 3,6 Gew.-% Graphit und 6,5 Gew.-% n-Pentan) wurde nach Abkühlen von 260°C auf 180°C über einen Seitenextruder in einer Polystyrolschmelze vorgemischtes Hexabromcyclododekan (HBCD) (1,8 Gew.-% HBCD, 3,6 Gew.-% Polystyrol bezogen auf Hauptstrom) zudosiert. Über eine Kolbenpumpe und Dosierlanze wurde stromabwärts Dicumylperoxid als Flammschutzsynergist zudosiert. Die resultierende Polymerschmelze wurde bei einem Durchsatz von 60 kg/h durch eine Düsenplatte mit 32 Bohrungen (0,75 mm Durchmesser) gefördert und mit Hilfe einer druckbeaufschlagten Unterwassergranulierung zu kompakten Granulaten mit enger Größenverteilung granuliert.

### Beispiel 6:

Zu einem Hauptstrom einer treibmittelhaltige Polymerschmelze (Polystyrol 158 K, 3,6 Gew.-% Graphit und 6,5 Gew.-% n-Pentan) wurde nach Abkühlen von 260°C auf 180°C mittels einer Drehschieberpumpe 3,3 Gew.-% einer Lösung (entstanden aus einer Suspension durch Erwärmen auf 160 °C) aus 60 Gew.-% HBCD und 40 Gew.-% Joncryl ADF 1300 eingemischt. Die resultierende Graphit-, Treibmittel- und Flammschutz-haltige Polymerschmelze wurde bei einem Durchsatz von 60 kg/h durch eine Düsenplatte mit 32 Bohrungen (0,75 mm Durchmesser) gefördert und mit Hilfe einer druckbeaufschlagten Unterwassergranulierung zu kompakten Granulaten mit enger Größenverteilung granuliert.

### Vergleichsversuch V2

Zu einem Hauptstrom einer treibmittelhaltige Polymerschmelze (Polystyrol 158 K, 3,6 Gew.-% Graphit und 6,5 Gew.-% n-Pentan) wurde nach Abkühlen von 260°C auf 180°C über einen Seitenextruder in einer Polystyrolschmelze vorgemischtes Hexabromcyclododekan (HBCD) (1,4 Gew.-% HBCD, 2,8 Gew.-% Polystyrol bezogen auf Hauptstrom) zudosiert. Über eine Kolbenpumpe und Dosierlanze wurde stromabwärts Dicumylperoxid als Flammschutzsynergist zudosiert. Die resultierende Polymerschmelze wurde bei einem Durchsatz von 60 kg/h durch eine Düsenplatte mit 32 Bohrungen (0,75 mm Durchmesser) gefördert und mit Hilfe einer druckbeaufschlagten Unterwassergranulierung zu kompakten Granulaten mit enger Größenverteilung granuliert.

Die erhaltenen expandierbaren Polystyrolgranulate wurden in strömendem Wasserdampf zu Schaumstoffpartikel mit einer Dichte von etwa 20 g/l vorgeschäumt und nach 24-stündiger Lagerung in gasdichten Formen mit Wasserdampf zu Schaumstoffkörpern verschweißt.

Nach 72-stündiger Lagerung der Schaumstoffkörper wurde das Brandverhalten bestimmt. Hierfür wurden ein B2 Test in Anlehnung an DIN 4102 durchgeführt und wie folgt bewertet:
- ++: sehr gut bestanden
- +: bestanden
- -: nicht bestanden

Die Menge an Flammschutzmittel (Dosierung) sowie die Ergebnisse des Brandschutztestes und die Viskositätszahl VZ, gemessen im EPS-Partikelschaum, sind in Tabelle 1 zusammengefasst.

**Tabelle 1:**

| Beispiel | HBCD [Gew.-%] | Synergist [Gew.-%] | Synergist | Flammschutztest B2 | PS | VZ |
|---|---|---|---|---|---|---|
| 1 | 1,8 | - | - | ++ | 158 K | |
| 2 | 1,6 | - | - | ++ | 158 K | |
| 3 | 1,4 | | | + | 158 K | |
| 4 | 2,0 | 0,4 | Perkadox 30 | + | 158 K | 85 |
| 5 | 1,2 | - | - | + | 158 K | 86 |
| 6 | 2,0 | | | ++ | 158 K | |
| V1 | 1,8 | | | + | 158 K | |
| V2 | 1,4 | | | - | 158 K | |

## Patentansprüche

1. Verfahren zur kontinuierlichen Einbringung von Feststoffpartikeln in druckbeaufschlagte Polymerschmelzen, **dadurch gekennzeichnet, dass** die Feststoffpartikel in Form einer Suspension mittels einer Drehschieberpumpe in die druckbeaufschlagte Polymerschmelze eingebracht wird.

2. Verfahren nach Anspruch eins, **dadurch gekennzeichnet, dass** der Feststoffgehalt der Suspension im Bereich von 60 bis 95 Gew.-% liegt.

3. Verfahren nach Anspruch 1 oder 2, **dadurch gekennzeichnet, dass** die Suspension bei einer Temperatur im Bereich von 20 bis 180° eine Viskosität von 10 bis 1000 mPas aufweist.

4. Verfahren nach einem der Ansprüche 1 bis 3, **dadurch gekennzeichnet, dass** als Suspensionsmedium ein aliphatischer Kohlenwasserstoff oder Kohlenwasserstoff Mischung eingesetzt wird.

5. Verfahren nach einem der Ansprüche 1 bis 4, **dadurch gekennzeichnet, dass** als Feststoff Hexabromcyclododecan (HBCD) mit einem D50-Wert von weniger als 80 µm eingesetzt wird.

6. Verfahren zur Herstellung von flammgeschützten, expandierten oder expandierbaren Styrolpolymerpartikeln oder Styrolpolymer-Extrusionsschaumstoffplatten durch Schmelzeextrusion, **dadurch gekennzeichnet, dass** das Flammschutzmittel in Form einer Suspension nach einem Verfahren gemäß den Ansprüchen 1 bis 5 in eine Styrolpolymerschmelze eingebracht wird.

## Claims

1. A process for the continuous introduction of solid particles into pressurized polymer melts, which comprises introducing the solid particles in the form of a suspension by means of a rotary gate pump into the pressurized polymer melt.

2. The process according to claim 1, wherein the solids content of the suspension is in the range from 60 to 95% by weight.

3. The process according to claim 1 or 2, wherein the viscosity of the suspension at a temperature in the range from 20 to 180°C is from 10 to 1000 mPas.

4. The process according to any of claims 1 to 3, wherein the suspension medium used comprises an aliphatic hydrocarbon or hydrocarbon mixture.

5. The process according to any of claims 1 to 4, wherein the solid used comprises hexabromocyclododecane (HBCD) whose D50 value is less than 80 µm.

6. A process for the production of flame-retardant, expanded or expandable styrene polymer particles or of extruded styrene polymer foam sheets via melt extrusion, which comprises introducing the flame retardant in the form of a suspension in a process according to claims 1 to 5 into a styrene polymer melt.

## Revendications

1. Procédé d'introduction continue de particules solides dans des masses fondues de polymères sous pression, **caractérisé en ce que** les particules solides sont introduites dans la masse fondue de polymère sous pression sous la forme d'une suspension par une pompe rotative à palettes.

2. Procédé selon la revendication 1, **caractérisé en ce que** la teneur en solides de la suspension est dans la plage allant de 60 à 95 % en poids.

3. Procédé selon la revendication 1 ou 2, **caractérisé en ce que** la suspension présente à une température dans la plage allant de 20 à 180 °C une viscosité de 10 à 1 000 mPas.

4. Procédé selon l'une quelconque des revendications 1 à 3, **caractérisé en ce qu'**un hydrocarbure aliphatique ou un mélange d'hydrocarbures est utilisé en tant que milieu de suspension.

5. Procédé selon l'une quelconque des revendications 1 à 4, **caractérisé en ce que** de l'hexabromocyclododécane (HBCD) ayant une valeur D50 inférieure à 80 µm est utilisé en tant que solide.

6. Procédé de fabrication de particules de polymère de styrène ou de plaques de mousse extrudées de polymère de styrène expansées ou expansibles ignifugées par extrusion d'une masse fondue, **caractérisé en ce que** l'agent ignifuge est introduit dans une masse fondue de polymère de styrène sous la forme d'une suspension par un procédé selon les revendications 1 à 5.
